# EUROPEAN PATENT SPECIFICATION

(11) **EP 1 949 624 B1**
(45) Date of publication and mention of the grant of the patent: **10.02.2010**
(21) Application number: 06818593.3
(22) Date of filing: 16.11.2006
(51) Int. Cl.: H04L 12/66, H04L 12/56

(54) **TRANSPARENT SIGNAL RELAY SYSTEM FOR PACKET TRANSMISSION SERVICES**
TRANSPARENTES SIGNALRELAISSYSTEM FÜR PAKETÜBERTRAGUNGSDIENSTE
SYSTEME DE RELAIS DE SIGNAUX TRANSPARENT POUR SERVICES DE TRANSMISSION DE PAQUETS

(30) Priority: 16.11.2005 GB 0523345
(43) Date of publication of application: 30.07.2008
(73) Proprietor: TynTec Ltd., Douglas Isle of Man IM1 1EA (GB)
(72) Inventor: BEGALL, Christoph, 44139 Dortmund (DE); KOWALZIK, Michael, 44139 Dortmund (DE); TRAPP, Thorsten, 44139 Dortmund (DE); WAADT, Andreas, 47048 Duisburg (DE); BRUCK, Guido, H., 47048 Duisburg (DE); JUNG, Peter, 47048 Duisburg (DE)
(74) Representative: Harrison, Robert John
(86) International application number: PCT/EP2006/011005
(87) International publication number: WO 2007/057186

(56) References cited:
- US-A- 6 061 650
- US-A1- 2002 098 840
- US-A1- 2003 123 466

## Description

### FIELD OF THE INVENTION

The invention relates in particular to a system and a method for sending a data packet from a first communication network to a second communication network, in particular mobile communications networks.

### BACKGROUND TO THE INVENTION

Packet transmission services have continuously gained in importance in mobile communications. Such services include the SMS (Short Message Service), first introduced in the GSM (Global System for Mobile Communications) protocol, and TCP/IP (Transmission Control Protocol/Internet Protocol) services. More details of these services are described in the book by M.-B. Pautet: The GSM system for mobile communications, published by the authors, ISBN 2-9507190-0-7, 1992; and in M. Rahnema: Overview of the GSM system and protocol architecture, IEEE Communications Magazine, vol. 31 (April 1992) no. 4, pp. 92-100.

In mobile communications, one example of a packet transmission service which has had tremendous economic success is the SMS used both in GSM and in GPRS (General Packet Radio Service) mobile communications networks. Principles of the SMS are described in G. Brasche, B. Walke: Concepts, services, and protocols of the new GSM phase 2+ general packet radio service. IEEE Communications Magazine, vol. 35 (August 1997) no. 8, pp. 94-104.

As is pointed out in J.-H. Park: Wireless internet access for mobile subscribers based on the GPRS/CTMTS network, IEEE Communications Magazine, vol. 40 (April 2002) no. 4, pp. 38-49, a sustained high Quality of Service (QoS) level is mandatory and insisted upon by the senders of the messages. In order to enable the deployment of the packet transmission services like SMS in professional environments, it is necessary to define and maintain a predetermined level of reliability for the packet transmission services and also to define and maintain attributes relating to precedence of packet transmission services as well as for the delay of the packet transmission service.

Further problems in the delivery of packets arise when the originating mobile station and the destination mobile station are subscribed to different network operators of different mobile communications networks in the absence of roaming agreements between these network operators.

Roaming agreements for packet transmission services between network operators are established all around the world: However, in some areas SMS roaming can sometimes be difficult. Quite often, small network operators are faced with numerous problems in establishing roaming agreements with larger network operators. Voice telephone calls between different mobile communications networks into foreign countries can be routed through the ISUP (ISDN User Part) using fixed telephone networks; however the provision of SMS services requires roaming agreements between the network operators. That is the reason for scenarios in which customers are able to phone mobile terminals in foreign countries, but are unable to use packet transmission services to the same mobile terminal. Presently, there are long waiting lists for small network operators who want to establish roaming agreements with the major network operators. The major network operators are often unwilling to establish these roaming agreements because an unwieldy number of roaming agreements. As a result there are restrictions in the service accessibility for packet transmissions, such as SMS services.

Together with the SMS service in the GSM protocol, there are other packet switched services which have sprung up in the last years and are having similar compatibility problems like the SMS services. An example is found in North America in which the IS41 and IS95 protocols are used in TDMA (Time Division Multiple Access) and CDMA (Code Division Multiple Access) networks (e.g. CdmaOne, Cdma2000).

Even providers of the popular Instant Messaging (IM) Services (e.g. ICQ, MSN Messenger, AIM or IRC) are beginning to connect their IM networks, in order to get over the obstacles of communication restricting incompatibility. Currently there are many different protocols used by the different IM providers. Some of the most important protocols are Jabber, an accepted internet standard, and SIP (Session Initiation Protocol), which is created by the IETF (Internet Engineering Task Force) and popular for its packet switched telephoning use ("voice over IP").

The above-mentioned services use central Mapping Servers, which provide status and routing information to the different devices, Mobile Stations (MS), etc (collectively called service clients). To be reachable, the service client notifies the central Mapping Server about its status and location, when it is turned on or changes its address. When the service client, that wants to initialize a connection with a target device, has the needed routing information from the Mapping Server, the service client is able to connect to the target device directly through the network, without further detour over the central Mapping Server or another server.

In order to forward signals into a destination network subsystem which is not directly reachable (e.g. due to missing roaming agreements), a signal relay system is used, which is described later in more detail.

In case of a GSM network, a Home Location Register (HLR) provides the functionality of the aforementioned Mapping Server. The stored information about a mobile station (service client), are the IMSI (International Mobile Subscriber Identity) of the mobile station and its last known status or address, if the mobile station is reachable. This address is the global title (GT) of the Mobile Switching Center (MSC) which is connected with a base station having a radio link to the mobile station. The GT of the MSC (the MSC-GT) is routing information to that MSC and therefore routing information to the mobile stations which are located in the NSS (network and switching subsystem) of that MSC.

SMS are typically first send to a SMS Center (SMSC) which is responsible for the delivery of the SMS to the called party. The SMSC uses several MAP primitives of the SS7 protocol to transmit short messages. The "send routing information" request is used to query a HLR for routing information to a subscriber (the mobile station). The "forward short message" service request is used to forward the short message to the MSC which is connected to the called party subscriber and to the called party subscriber. The "report SM delivery status" service request is used to set the "message waiting data flag" in the HLR after a unsuccessfully delivery attempt. The three service requests are explained in more detail later.

Every service request delivers a status report. The interpretation of these status reports at the SMS Center facilitates the generation of various error codes, including the acknowledgement of the successful delivery of the SMS. In order to enable a high Quality of Service (QoS) level and to keep the control of the SMS, it is important for the SMSC or a message originating Operator, to retrieve all signal acknowledgements, even if a signal relay system is used to forward signals into a destination network subsystem which is not directly reachable.

It is possible for a service subscriber to change its subscription and thus its home network from a first network operator OP1 to a second network operator OP2. The service subscriber is generally able to keep his old logical address (ISDN number) when changing - this is known as porting the called party number. In case of mobile networks the called party address is the MSISDN (Mobile Station Integrated Services Digital Network). Usually the Mapping Server of the mobile station, which was ported from the first network operator OP1 to the second network operator OP2, is located in the second network OP2.

Suppose now that a sender wishes to send an SMS to the service subscriber of the ported mobile number. The ,sender is subscribed to a message originating operator (OP). This message originating operator has roaming agreements with the first network operator OP1 which is the number range holder of the MSISDN global title of the ported mobile station. As long as the message originating operator also has a roaming agreement with the new home operator (second network operator) OP2 of the service subscriber, no problems occur: In order to retrieve routing information to the destination subscriber (here: the ported mobile number), the message originating operator (OP) will send a querying MAP service request to the number range holder of the called party address, the MSISDN. of the destination subscriber. This number range holder is the first network operator OP1. If, as usual, the mapping server or Home Location Register (HLR), which is responsible for the ported destination subscriber, is located in the second network OP2, a Signaling Relay Function for support of Mobile Number Portability (MNP-SRF) of OP1 will forward the querying MAP service request to OP2. The mapping server (HLR) of OP2, responsible for the ported destination subscriber will answer the query with an acknowledging signal which is sent to the message originating operator (OP). If, however, the message originating operator OP has no agreement with the first network operator (number range holder) OP1; no communication between the message originating operator OP and the first network operator OP1 is possible. On the other hand, if the message originating operator OP has an agreement with the first network operator OP1, but no agreement with the second network operator OP2 (and now home network of the service subscriber), the acknowledging answer from the mapping server (HLR) of OP2 will not reach the origination operator (OP) due to the absence of roaming agreements between OP and OP2. The message originating operator OP does not get any answer as to the sent MAP service request and may only guess the reason.

Several patents and patent applications are known which address the problem of improving the service between mobile communications networks.

US patent application 2005-0124302 (Yoon et al.) teaches a method to improve the service within wireless systems which collaborate. The HLR information is periodically updated and synchronized through interfacing between the wireless network systems.

The patent US-B-6,832,089 (Nilcom) teaches a method which addresses the problem of number portability or incomplete number plans within the same country. A computer with SS7 connections is used as an SMSC relay to relay the short messages sent by an operator OP to a subscriber of a network OP1 visiting a second network OP2, OP2 having no roaming agreement with the network OP. The SMS is sent with the global title GT of the visited MSC to a companion SMSC in a network which does have a roaming agreement with network OP2. The computer is capable of interrogating all the HLRs of the country in which the number portability is operated. A database is built in a cache memory of the computer for all the mobile subscribers of the country in which the portability is operated so that the computer will know which HLR to interrogate, without searching, once the HLR has been found a first time.

The patent US-B-6,512,926 teaches a dynamic routing system for transmission of SMS. A numbering plan contains the numbers of the short message transmission centers (SMSC) and the possible interconnections between the different SMSCs and the switching centers (MSC) of the networks of the called mobile telephone. A numbering plan manager defines from the number of the called party the relay transmission center or centers (SMSC) in order to reach the switching centre (MSC) visited by the intended recipient of the short message (SMS).

Document US 2003/123466 discloses a system, relay according to the preamble of claims 1 and 8. Document US 2003/123466 also discloses a method for sending a data packet from a first communication network into a second communication network which is directly unreachable for the first communication network. The method taught comprises the steps of passing the data packet from the first communication network into the second communication network; awaiting a response signal; and forwarding the response signal back into the first communication network.

Various approaches to improve the delivery of SMS between different network providers have been suggested in the prior art. However, none of the known approaches teaches a method which allows the generation of reliable Quality of Service data. Currently, there is no practical way to determine the receipt of packet transmissions between several different network operators which have no roaming agreements. These operators can be possibly located in different countries.

### SUMMARY OF THE INVENTION

It is therefore an object of the invention to ensure reliable packet transmission services between different communications networks.

It is furthermore an object of the invention to improve packet transmission services between different communication networks which provide number portability.

It is another object of the invention to provide a method which allows the determination of Quality of Service for packet transmission services, such as Short Message Service, exchanged between communications networks without roaming agreement.

It is a further object of the invention to enable maintaining a high level of Quality of Service for a SMS-Center.

These and other objects of the invention are solved by a system for sending a data packet from a first communication network to a second communication network, the second communication network being directly unreachable by the first communication network, whereby the system comprises a transmitting device for transmitting the data packet to the first communication network; a receiving device for accepting the data packet from the second communication network and generating a data packet response; and a relay for acceptance of the data packet from the first communication network, passing the data package to the second communication network and for acceptance of the generated data package response and passing the generated data packet response to the first communication network. The relay is adapted to modify a source address of the data packet and modify routing information of the response signal.

Any system in which the transmitting device, which sends the data package (such as an SMS or a MMS), is in a first communication network and the receiving device is in a second communication network and the second communication network is directly unreachable for the first communication network needs to provide some means of transferring the data package from the first communication network to the second communication network. The receipt of a response of the receiving device which acknowledges the receipt of the data package is advantageous as it enables a reliable packet transmission service to be provided compared to an uncertain situation when no received response is provided.

The communication network is a mobile communication network such as GSM, CDMA or UMTS network, or an instant messaging network, such as Jabber, AIM, ICQ, MSN or IRC.

The system of the invention further allows the measurement of quality of service parameters for the delivery of data packages. An operator of a packet transmission service on the side of the first communication network needs to know whether the packet transmission has been received by the receiving device. Only then the operator can assess the quality of service of its packet transmission service to the second communication network which is the prerequisite of improving the quality of service in the transmission of data packages.

The invention further provides a relay which comprises a first module for the reception of a data packet from a first communication network and for transmission of a first response to the first communication network and a second module for the transmission of a data packet to a second network and for reception of a second response from the second communication network. The first module and the second module can be implemented as a single system. The relay is adapted to modify a source address of the data packet and modify routing information of the response signal.

The relay provides the facility to forward information bi-directionally between a first communication network and a second communication network which is directly unreachable. It is advantageous not only to transfer information from the first communication network to the second communication network which would be sufficient to send a data package to a designated recipient. The additional transfer of the response, e.g. the acknowledgement of receipt of the data packet, in the opposite direction from the second communication network to the first communication network enables the use of the packet transmission for messages.

The invention further provides a method for sending a data packet from a first communication network into a second communication network which is directly unreachable for the first communication network. The method comprises the steps of passing the data packet from the first communication network into the second communication network; awaiting a response signal; and forwarding the response signal back into the first communication network. The method comprises modifying a source address of the data packet on passing the data packet from the first communication network to the second communication network and modifying routing information of the response signal on forwarding back into the first communication network.

It is advantageous to receive the response signal from the second communication network to the sent data packet from the first communication network even when the second communication network is directly unreachable for the first communications network. The response signal allows the measurement of the quality of service provided by the data packets. As discussed above, the response signal also allows the use of the packet transmission for services which require a proof of delivery or even for time critical services.

### DESCRIPTION OF THE FIGURES

Fig. 1 shows a system for messaging with a central mapping server.
Fig. 2 shows the system of Fig. 1 for handling of SMS in GSM.
Fig. 3 shows a system for number portability.
Fig. 4 shows a system for signal forwarding by a transparent relay.
Fig. 5 shows a system for message forwarding by a transparent relay.
Fig. 6 shows a multi operator relay system.

### DETAILED DESCRIPTION OF THE INVENTION

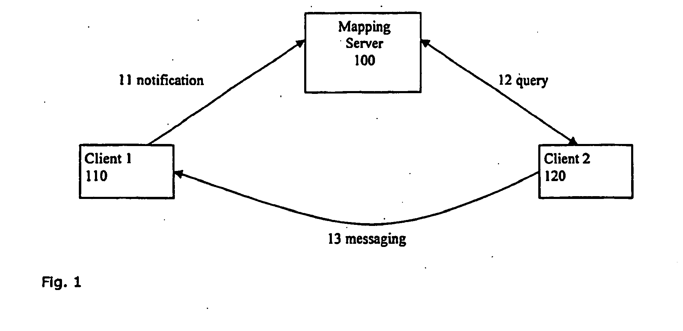

Fig. 1 shows schematically a system for messaging. The system has a central mapping server 100. Packet transmission services, such as SMS, ICQ, MSN Messenger, XMPP, use the central mapping server 100 which provides status and routing information to service clients, such as mobile stations, which are shown as a first service client 110 and a second service client 120 on Fig 1. To be reachable the first service client 110, notifies the central mapping server 100 about its status and location, when it is turned on or changes the address. This is shown as a notification signal 11. In case of the GSM protocol, this is done by sending a location update to the HLR 140 (not shown in the overview Fig. 1). The notification signal 11 contains the global title of the MSC (the MSC-GT) of the network and switching subsystem (NSS) in which the first client 110 roams. To contact another device, for example the first client 110, within the same mobile communications network, the second client 120 needs the address/number of the first client 110. In the GSM protocol this is the MSISDN (i.e. the telephone number). The MSISDN of the first client 110 comprises routing information to the mapping server 100 of the first client 110. Hence, a query 12, containing the MSISDN as the called party address of the first client, can be answered by the mapping server 100 with the status and logical location of the first client 110 within the mobile communications network. When the second client 120, that wants to initialize the connection, has obtained the needed routing information from the mapping server 100, the second client 120 is able to connect to the first client 110, directly through the mobile communications network, without further detour over a central server. This is shown as messaging signal 13.

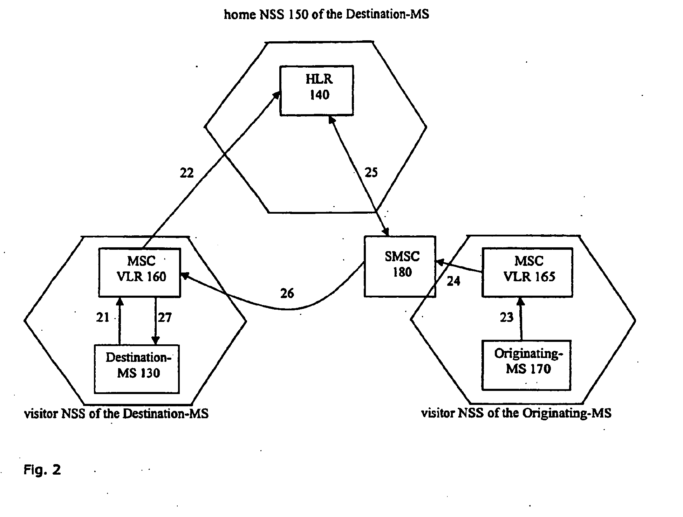

Fig. 2 shows how an SMS is sent in a GSM network as an example. Let us suppose that a destination mobile station 130 is roaming in a visitor network and switching subsystem. To be reachable, the destination mobile station 130 notifies the HLR 140 of its home NSS (network and switching subsystem) 150 about its location, when it is turned on or changes the NSS. This is done by a location update procedure. The location update request, containing identification data about the destination mobile station 130, is transmitted by signal 21 to a MSC VLR (Visitor Location Register) 160 of the network and switching subsystem (NSS) in which the destination mobile station 130 is located. The MSC VLR 160 informs the HLR 140 via signal 22. The transmitted routing information (the global title of the mobile switching center, i.e. MSC-GT, and VLR) is stored into the HLR 140 for the destination mobile station 130 and can be used to route signals to the destination mobile station 130.

Suppose now that an SMS is originated by an originating mobile station 170 and is to be sent to the destination mobile station 130. The SMS is sent to the SMSC (SMS-Center) 180 which is responsible for the home NSS of the message originating MS 170 (signals 23 and 24 in Fig. 2). Then the SMSC 180 queries the routing information (the MSC-GT) for the destination mobile station 130 from the HLR 140 (signal 25 in Fig. 2). Having obtained the routing information, the SMSC 180 forwards the SMS to the destination MS 130 (signals 26 and 27 in Fig. 2).

For the SMS center 180 in a GSM network, several primitives out of the MAP of the SS7 protocol are used to transmit short messages, namely:
MAP-SEND-ROUTING-INFO-FOR-SM (srism)
   This service request is used between a gateway MSC (Mobile Switching Center) and the HLR 140 (Home Location Register) to retrieve the routing information needed for routing the short message to a servicing MSC of the destination mobile station 130. This request for routing information from the SMS Gateway MSC contains the MSISDN (Mobile Subscriber ISDN) of the subscriber (i.e. destination mobile station 130), while the result contains the ISDN number (routing address) of the Servicing MSC (i.e. MSC 160 of the visitor NSS). This address is used to forward the short message in a forward SM process.
MAP-FORWARD-SHORT-MESSAGE (fwsm)
   This service request is used to forward mobile originated or mobile terminated short messages between the SMS Gateway MSC, which has a connection to the SMS center 180, and the Servicing MSCs.
MAP-REPORT-SM-DELIVERY-STATUS (rsds)
   This service request is used between the Gateway MSC and the HLR 140. When the transmission of a short message from the SMS center 180 to the mobile station - such as the destination mobile station 130 - is unsuccessful, e.g. because the subscriber was absent, the MSC, e.g. the MSC 160 of the visitor NSS, returns a negative response to the Gateway MSC and the Gateway MSC sends a ReportSM-Delivery Status to the HLR 140 to allow for a delayed delivery of the short message. MAP-REPORT-SM-DELIVERY-STATUS is used to set the Message Waiting Data flag into the HLR 140 or to inform the HLR 140 of successful SM transfer after polling.
MAP-ALERT-SERVICECENTER (asc) (only for incoming message from an HLR 140 to a SMS-C 180). This service request informs the SMS-Center 180 that the mobile station 130 has become available again for message reception after a prior unsuccessful delivery attempt from the SMS-Center 180)

Every one of the service requests delivers a status report. The interpretation of these status reports at the SMS center 180 facilitates the generation of various error codes, including the acknowledgement of the successful delivery of the SMS. The mapping of error codes to their verbose description has not been standardized. Table I shows a conceivable mapping of error code numbers to verbose descriptions. Since the error code descriptions are not yet standardized other error codes descriptions are conceivable.
In order to enable a high QoS level and to keep the control of a SMS, it is important for the SMSC 180 or the message originating operator, to retrieve all signal acknowledgments, even if a signal relay system is used to forward signals into a destination network and switching subsystem, which is not directly reachable. The signal relay system has to be transparent to provide this functionality.

**TABLE I**

| ERROR CODES FOR MAP SERVICE REQUESTS IN AN SMS CENTER | |
|---|---|
| Error code | Verbose description |
| 0 | Successful SMS Without Errors |
| 1 | TC-INVOKE Timeout |
| 2 | Unknown MSISDN |
| 3 | Absent Subscriber Short Message |
| 4 | Short Message Delivery Failure: SIM (Subscriber Identity Module)/Mobile Terminal Memory Exceeded |

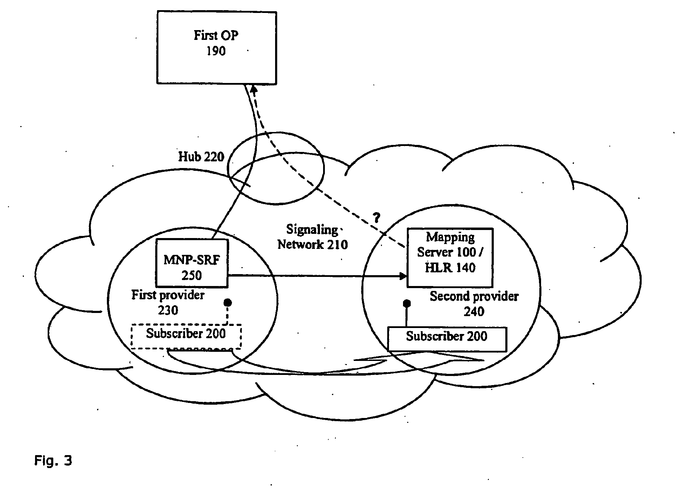

Fig. 3 shows the situation of a first operator 190, which could be a mobile communications network operator or a SMSC operator, which communicates with a called subscriber 200 within a signalling network 210. A hub 220 in Fig. 3 denotes an access point which is used by the first operator 190 in order to connect to the signalling network 210 and to exchange signals with the signalling network 210. The hub 220 routes signals, coming from the first operator 190, into the signalling network 210 and returns signals to the first operator 190 if the signals are addressed to the first operator 190. In the case of SMS signals in a GSM network, for instance, the hub 220 would be the Gateway MSC (GMSC), the signalling network 210 is the SS7 network of GSM and the called subscriber 200 could be a Mobile Station (MS).

When the called subscriber 200 wants to change from a first network provider 230 to a second network provider 240, the called subscriber 200 generally is able to keep his old called party address (MSISDN), as explained above. The first network provider 230 and the second network provider 240 can also be network operators or they could be "virtual providers" utilising networks established by network operators (MVNO's). The first network provider 230 of the called subscriber 200 and the new home network provider, the second network provider 240 to which the called subscriber 200 moves, have usually no contract to share their mapping server 100 (HLR 140). The MSISDN is adopted by the new home network provider 240 and gets an entry, providing status and routing information, in a corresponding register of the mapping server 100 (HLR 140) of the second network provider 240 which is the new home network providers.

Suppose now a message is to be sent to by the first operator 190 to the called subscriber 200. In order to retrieve routing information a querying signal, containing the called party address of the called subscriber is sent from the first operator 190, therefore called querying message originating first operator, to the mapping server 100 (HLR 140). The querying signal has to be sent before the first operator 190 is able to build up a connection or send a message to the called subscriber 200. The called party address (ISDN, MSISDN) is interpreted by the hub 220, to which the querying signal is sent, as routing informations to the network provider to which the number range of the called party address is assigned. This is often no longer the home networks provider of the called subscriber 200, if the called subscriber 200 has changed the network provider. In other words, the called party address is within the number range assigned to the originals home network provider (the first network provider 230) and the called subscriber 200 has moved to the second network provider 240 as new home network provider. A Signalling Relay Function for support of Mobile Number Portability (MNP-SRF) of the original home network provider (the first network provider. 230) forwards the querying signal to the new home network provider (the second network provider 240) of the called subscriber 200. The mapping server 100 (HLR 140) of the new home network provider answers the querying signal und returns a response signal back to the querying message originating operator (i.e. the first operator 190).

It is also conceivable, that the original home network provider, the first network provider 230, and the new home network provider, the second network provider 240, collaborate and share their mapping server 100 (HLR 140) and the ported called subscriber 200 remains the responsibility of its old mapping server 100 (HLR 140) of the first network provider 230. In this case, the querying signalling, querying for the routing information for the called subscriber 200 does not have to be forwarded by the MNP-SRF.

In the following example we consider the common case that the mapping server 100 (HLR 140) of the called subscriber 200, e.g. a mobile station, which was ported from the first network provider 230 to the second network provider 240, is located in the network of the second network provider 240. The querying signals, sent to the first network provider 230 (as the number range holder of the called party address of the destination subscriber 200) are forwarded by the MNP-SRF of the first network provider 230 to the new home network provider, the second network provider 240.

As explained above, as long as the message originating first operator 190 has roaming agreements with the number range holder (i.e. the first network provider 230) as well as with the new home network first operator, the second network provider 240, of the called subscriber 200, no problems occur. If the message originating first operator 190 has no agreement with the number range holder (the first network provider 230), no communication between the message originating provider 190 and the number range holder (first network provider 230) is guaranteed. On the other hand, if the message originating first operator 190 has an agreement with the number range holder (the first network provider 230), but no agreement with the new home network provider (the second network provider 240) the querying signal will be forwarded to the new home network provider, but the response of the target mapping server 100 (HLR 140), respectively, will not reach the message originating first operator because of the absence of a roaming agreement between the new home network provider in which the mapping server 100 (HLR 140) is located and the message originating first operator. In this case, the message originating first operator 190 does not get any response to the querying signal. A routing failure occurs or the signal times out without any acknowledgement and the message originating first operator 190 could merely be able to guess the reason.

A message originating first operator 190, that has no roaming agreement for sending messages to a particular destination mobile communications network could order a service from another second operator, which can interact with the particular destination mobile communications network. However, if the message originating operator wants to control and manage the messages, a transparent signal relay is required.

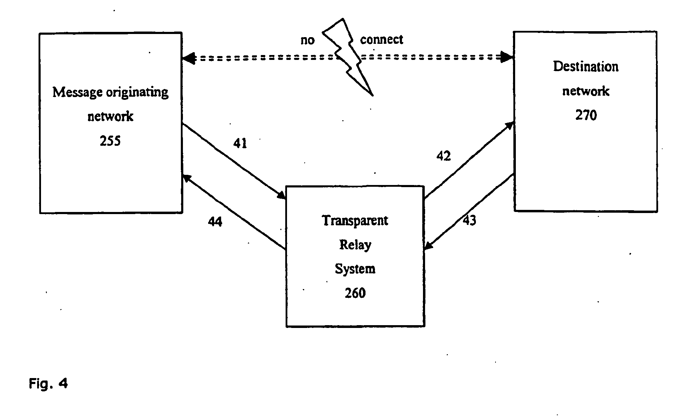

Fig. 4 illustrates a transparent signal relay 260 and its interactions. The transparent signal relay 260 is designed to translate and control all of the signals between the message originating network 255 and the destination network 270.

Suppose that the message originating network 255 wants to send a signal into the destination network 270 and the destination network 270 does not accept its signals or direct transmission is not provided. This problem can be solved by sending a signal 41 to the transparent signal relay 260 instead. The transparent signal relay 260 then forwards the content of the signal 41 into the destination network 270 (signal 42), waits for a response signal 43 and forwards the response signal 43 back to the message originating network 255 as signal 44. Due to the forwarding of the acknowledging responses of the transmitted signals, the transparent relay system 260 is transparent for the message originating network 255. In case of SMS messages for instance, this is important for billing and prepaid applications as well.

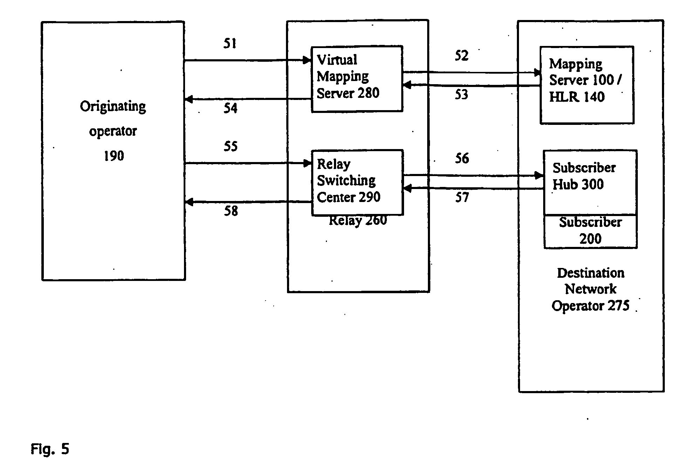

Fig. 5 shows that the message originating operator 190 first has to query the mapping server 100 (HLR 140) for the routing information to the service access point, i.e. the subscriber hub 300, of the called subscriber 200 to send a message or build a connection to the called subscriber 200. In this context, the hub 300 is the access point to the destination network operator 275 for the called subscriber 200. A servicing MSC could be such a hub 300 for instance.

To forward the routing information to the destination network operator 275, which is unreachable for the message originating operator 190, the transparent signal relay 260 provides a virtual mapping server 280. The query signal 51 for the routing information to the called subscriber 200 is sent to the virtual mapping server 280. The query signal 51 contains at least, but not only the MSISDN of the called address party 200 and the address (global title) of the originating operator 190. The transparent signal relay 260 replaces the source address, i.e. the global title of the message originating operator 190 by the global title of the transparent relay 260 and transmits the query signal 52 to the mapping server 100 (HLR 140) of the destination network operator 275. The response signal 53 of the mapping server 100 (HLR 140) is sent back to the virtual mapping server 280 of the transparent signal relay 260.

The transparent signal relay 260 replaces the returned routing information of the response signal 52 by its own global title, i.e. the global title of the transparent signal relay 260, and forwards the routing information with the response signal 54 to the message originating operator 190. The replaced routing information is temporarily stored into a memory of the virtual mapping server 280 of the transparent signal relay 260, in order to associate following signals from the message originating operator 190 to the called subscriber 200 with its previous queried location.

Next, the message originating operator 190 sends one or more content signals 55, containing e.g. messages, commands or requests for the called subscriber 200, to a relay switching center 290. The content signals 55 contain, along with the raw data (PDU), some signalling overhead, in particular the address (global title) of the originating operator 190, the called party address of the called subscriber 200 and global title of the transparent relay 260. The relay switching center 290 replaces the global title of the transparent relay 260 by the previously saved routing information to the subscriber hub 300, which is temporary associated with the called party address of subscriber 200. The relay switching center 290 then forwards the content of all signals 55 as signals 56 to the mobile communication network 275 in which the called subscriber 200 is located. All acknowledge and/or response signals 57 are sent back to the relay switching center 290. The relay switching center 290 replaces the global title of the subscriber hub 300, where the called subscriber 200 is located by its own - global title, i.e. the global title of the transparent relay 260, and forwards the content of the acknowledge and/or response signals 58 as signals 58 to the message originating operator 190.

The called subscriber 200 could be a destination mobile station 130, if we consider SMS in GSM as an application example for the transparent signal relay 260. The mapping server 100, containing status and routing information about the destination mobile station 130 would be the HLR 140 which is responsible for the destination mobile station 130. The subscriber hub 300 of the mobile station 130 is the servicing MSC of the NSS in which the mobile station 130, is located. The query signal 51 and signal 52 for the routing information is done by a srism service request, while an fwsm service request is used for sending a message to the destination mobile station 130, i.e. for the signal 55 and signal 56.

Apart from the transmission of SMS messages, other applications are also conceivable for the transparent signal relay 260, e.g. the IS41 or IS95 protocols, which are used in other mobile applications. These protocols also use mapping servers 100 which provide routing information to the subscribers. The corresponding mobile networks (e.g. TDMA, CdmaOne, Cdma2000), comprise several network and switching subsystems, which are connected by roaming agreements. Furthermore, networks of Instant Messaging providers and their mapping servers 100 can also be connected by one or more of the transparent signal relays 260.

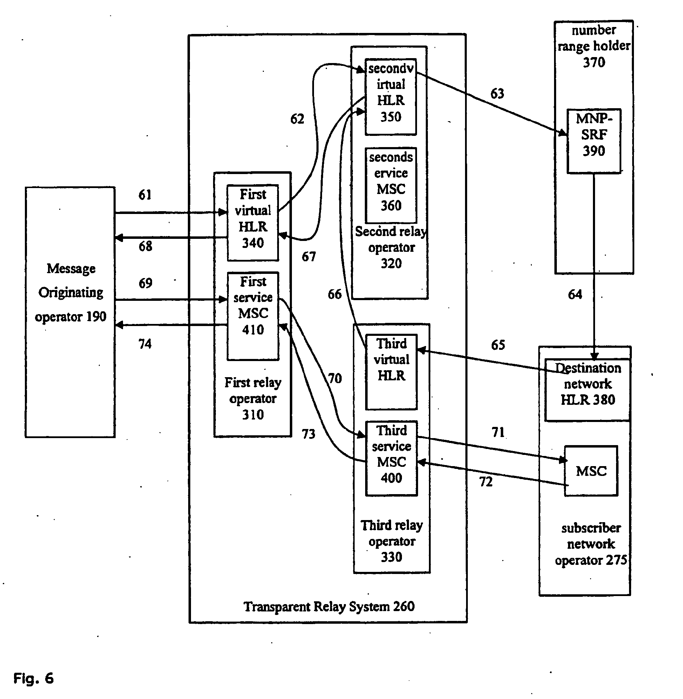

The obstacles occurring with the number portability problems require more sophisticated relay systems as shown in Fig. 6. In such a relay system there are several operators having different roaming agreements, if no single operator is available to provide roaming agreements to all operators involved in the communication, i.e. to and between the message originating operator 190, a number range holder 370 of the global title of the called subscriber 200 and to the destination network operator 275 of the called subscriber 200. Similar to the aforementioned examples, the transparent relay 260 can be applied to different standards and protocols. In the following the short message service (SMS) in a GSM network just acts as an example.

The transparent signal relay 260 of the invention may connect several network operators, e.g. a first relay operator 310, a second relay operator 320, and a third relay operator 330. Each of the different network operators of the transparent signal relay 260 uses a servicing MSC to transmit and receive SS7 signals for SMS messages. Generally the different network operators of the transparent signal relay 260 have different roaming agreements and possibilities to interact with other network operators and mobile network providers.

Suppose that a subscriber of the message originating operator 190 wishes to send an SMS to the destination subscriber, mobile station 130. The called party address (MSISDN) of mobile station 130 is in the number range of the number range holder 370 which has been the (first) provider of the mobile station 130, before it was ported to another (second) provider. This second provider is now the subscriber network operator 275, i.e. the network provider of mobile station 130. The new HLR (mapping server) which is now responsible for the mobile station 130 is the destination network HLR 380 of the subscriber network operator 275.

However, the global title of the MSISDN (telephone number) from mobile station 130 is routing information to the number range holder 370.

The message originating operator 190 sends a srism service request 61 to a first virtual HLR 340 of the transparent signal relay 260. The first virtual HLR 340 forwards the srism service request 61 as signal 62 to a second virtual HLR 350 of a second service MSC 360 inside the transparent signal relay 260. The second virtual HLR 350 can interact with the number range holder 370 of the global title of the destination mobile station 130. Signalling transmission inside the transparent signal relay 260 system can be done using IP connections or an internal signalling system such as SS7. The second virtual HLR 350, which interacts with the number range holder 370, changes the MSC-GT of the signal 62, before forwarding the signal 62 as signal 63 to the number range holder 370. The MNP-SRF of the number range holder forwards the signal as signal 64 to the subscriber network operator 275.

As previously explained the network operator which is the number range holder 370 does not have to be the network operator for the called subscriber 200 of the message. If not, the srism service request 63 is forwarded as signal 64 by the MNP-SRF 390 to the correct destination network HLR 380 of the destination network operator 275. The destination network operator 275 may not necessarily be able to interact with the second relay operator 320 of the transparent signal relay 260. As a result, the second relay operator 320 would have to change the MSC-GT of the calling party (the own global title) of the srism service request 63 to a global title, which is not necessarily one of the global titles of the second service MSC 360, but is a global title of a third MSC 400. The third MSC 400 belongs to a third relay operator 330 which is also part of the transparent signal relay 260 and has a roaming agreement with the destination network operator 275. The destination network HLR 380 of the destination network operator 275 will return the response of the srism service request, the signal 65, to the third relay operator 330.

The second relay operator 320 is not able to replace the calling party address in the srism service request with the global title of the third MSC 400 as it does not know that the number range holder 370 of the called subscriber's 200 MSISDN is not the destination network operator 275. If, furthermore, the destination network operator 275 has no roaming agreement with the second relay operator 320, the response (signal 65) of the destination network HLR 380 will not reach the second relay operator 320. As a result, the requesting srism service request 63 would time out, so the second relay operator 320 has to guess which one of the relay operators within the transparent signal relay 260 has a roaming agreement with the destination network operator 275. This can be done by querying the required routing information with several srism service requests with global titles of several other relay operators 330 within the transparent signal relay 260. As each relay operator 330 will have different roaming agreements, it is likely that at least one of the queries for the required routing information will be successful.

Using the relay internal connection, the finally retrieved signal 65, now containing the routing information and the path to the NSS of the subscriber network operator 275 where the destination mobile station 130 for the message is located, is sent as signal 66 to the second virtual HLR of the transparent signal relay 260, and further as signal 67 to the first virtual HLR. The first virtual HLR 340 from the first relay operator 310, which interacts with the message originating operator 190, stores this routing/path information into a temporary memory and replaces the global title of the NSS MSC where the destination subscriber 130 is located in signal 67 by its own global title, i.e. the global title of the first service MSC 410, and returns the response of the srism service request as signal 68 to the message originating operator 190. Once signal 68 is received, the message originating operator 190 sends an fwsm service request 69, containing the message for the destination mobile station 130 to the first service MSC 410 of the transparent signal relay 260. Using the internally provided connections, the message is forwarded as signal 70 to the third service MSC 400, which can interact with the destination network operator 275. The third relay operator 330 replaces the global title of the calling party in the message by its own (i.e. the third service MSC's 400) global title and sends the message as signal 71 into the network and switching subsystem where the destination mobile station 130 is located. The signal acknowledgement returns as signal 72 to the third service MSC 400 and is forwarded as signal 73 to the first service MSC 410, which then interacts with the message originating operator 190 by the signal 74.

To route the signal responses back to the message originating operator 190, it is necessary to store the global title of the message originating operator 190, when it is replaced by a global title of a MSC within the transparent relay system 260. The global title of the message originating operator 190 may be replaced two times: first by the global title of MSC 360 when the srism is send to the number range holder 390 and second by the global title of MSC 400 when the fwsm is sent to the subscriber network OP 275. It is not replaced by the global title of MSC 410.

The rsds service request can be routed in the same manner as the srism service request. Alternatively, the second virtual HLR 350 can select a specific third relay operator 330 as a destination the response to the rsds service request, by associating the MSISDN of signal 62 with the sender of signal 66 in a temporary memory after receiving the response to the srism service request.

In order to adapt the multi operator relay system for other standards and protocols, the HLRs 350 can be replaced by other types of mapping servers (e.g. DNS systems, ENUM) and the MSCs 360,400 by other types of access points or hubs, where the destination subscriber (which has not to be mobile) are connected to the network.

### List of Reference Numbers

- 11: Notification
- 12: Query
- 13: Messaging
- 21: Notification about location of MSC VLR
- 22: Notification about location of HLR
- 23: Sending of SMS by Originating MS to MSC VLR.
- 24: Sending of SMS by MSC VLR to SMSC
- 25: Query of SMSC for routing information from HLR
- 26: Sending SMS from SMSC to MSC VLR
- 27: Forwarding of SMS form MSC VLR to destination MS
- 41: Signal from message originating network
- 42: Forwarded signal from transparent signal relay to destination network
- 43: Response signal from destination network to transparent signal system
- 44: Forwarding response signal from transparent signal system to message originating network
- 51 1: Query signal from message originating operator to virtual mapping server
- 52: Query signal from virtual mapping server to mapping server of destination network operator
- 53: Response signal from mapping server of destination network operator to virtual mapping server
- 54: Response signal from virtual mapping server to message originating operator
- 55: content signal from message originating operator to relay switching center
- 56: content signal from relay switching center to subscriber hub .
- 57: Acknowledge and/or response signal from subscriber hub to relay switching center
- 58: Acknowledge and/or response signal from relay switching center to message originating operator
- 61: Srism service request from message originating operator to first virtual HLR
- 62: Srism service request from first virtual HLR to second virtual HLR
- 63: Srism service request from second virtual HLR to MNP-SRF of number range holder
- 64: Srism service request from MNP-SRF of number range holder to destination network HLR
- 65: Response to srism service request from destination network HLR to third relay operator
- 66: Forwarding of response to srism service request from third service MSC to the second virtual HLR of the transparent signal relay
- 67: Forwarding of response to srism service request from second virtual HLR to the first virtual HLR
- 68: Forwarding of response to srism service request from HLR of the first service MSC of the transparent signal relay to the message originating operator
- 69: Fwsm service request of message originating operator to first service MSC
- 70: Forwarding of fwsm service request of message originating operator from first service MSC to third service MSC
- 71: Forwarding of fwsm service request of message originating operator from third service MSC. to destination network operator MSC
- 72: Acknowledgement signal from destination network MSC to third service MSC
- 73: Forwarding of acknowledgement signal of destination network MSC from third service MSC to first service MSC
- 74: Forwarding of acknowledgement signal of destination network MSC from first service MSC to message originating operator
- 100: Mapping server
- 110: Client 1
- 120: Client 2
- 130: Destination MS 130
- 140: HLR
- 150: Home NSS
- 160: MSC VLR
- 165: MSC VLR
- 170: Origination MS
- 180: MSC
- 190: First operator / message origination operator
- 200: Called subscriber
- 210: Signalling network
- 220: Hub
- 230: First provider
- 240: Second provider
- 250: MNP-SRF
- 255: Message originating network
- 260: Transparent signal relay
- 270: Destination network
- 275: Destination network operator
- 280: Virtual mapping server
- 290: Relay switching center
- 300: Subscriber hub
- 310: First relay operator
- 320: Second relay operator
- 330: Third relay operator
- 340: First virtual HLR
- 350: Second virtual HLR
- 360: Second service MSC
- 370: Number range holder
- 380: Destination network HLR
- 390: number range holder MNP-SRF
- 400: third service MSC
- 410: First service MSC

## Claims

1. System for sending a data packet from a first communication network (255) to a second communication network (270) the second communication network (270) being directly unreachable by the first communication network (255) comprising
a transmitting device for transmitting the data packet from the first communication network;
a relay (260) for accepting the data packet from the first communication network (255) and passing the data packet to the second communication network (270)
a receiving device for accepting the data packet from the second communication network and generating a data packet response; and
the relay (260) being further adapted for accepting the generated data packet response and passing the generated data packet response to the first communication network (255),
**characterized in that** the relay (260) is adapted to modify a source address of the data packet and modify routing information of the response signal.

2. The system according to claim 1, whereby the data packet comprises SMS or Instant Messaging service.

3. The system according to any one of the claims 1 and 2 whereby the first communication network (255) and/or the second communication network (270) is a mobile communication network, or an Instant Messaging network.

4. The system according to any one of the preceding claims whereby the relay (260) comprises mobile switching centers of one or more mobile communication network operators.

5. The system according to claim 4 whereby a plurality of mobile switching centers is connected by an internal signalling system.

6. The system according to claim 5 whereby the internal signal system is based on internet protocol or SS7.

7. The system according to any one of the preceding claims whereby the transmitting device and/or the receiving device is a mobile station, a personal digital assistant, a computer, an instant messaging device or a telephone.

8. Relay (260) comprising
a first module for the reception of a data packet from a first communication network (255) and for transmission of a first response to the first communication network (255) and
a second module for the transmission of the data packet to a second communication network (270) and for reception of a second response from the second communication network (270), **characterized in that** the relay (260) is adapted to modify a source address of the data packet and modify routing information of the first response signal.

9. The relay (260) according to claim 8 whereby the data packet comprises SMS or Instant Messaging service.

10. The relay according to any one of the claims 8 and 9 whereby the first and/or the second communication network are a mobile communication network, or an Instant Messaging network..

11. The relay according to any one of the claims 8 to 10 whereby the first and/or second response is a message reporting a successful delivery of the data packet, a TC-INVOKE Timeout, an unknown MSISDN, an absent subscriber short message or a short message delivery failure.

12. The relay according to any of the claims 8 to 11 whereby the relay (260) comprises mobile switching centers of one or more communication network operators.

13. The relay according to claim 12 whereby a plurality of mobile switching centers is connected by an internal signalling system.

14. The relay according to claim 13 whereby the internal signal system is based on internet protocol or SS7.

15. Method for sending a data packet from a first communication network (255) into a second communication network (270) which is directly unreachable for the first communication network (255) comprising the following steps:
i.) the data packet from the first communication network (255) is passed into the second communication network (270), wherein a source address of the data packet is modified on passing the data packet from the first communication network (255) to the second communication network (270)
ii.) a response signal is awaited; and
iii.) the response signal is forwarded back into the first communication network (255), wherein routing information of the response signal is modified on forwarding back into the first communication network (255).

16. The method according to claim 15 whereby the data packet comprises a SMS or an Instant Messaging service.

17. The method according to any of the claims 15 and 16 whereby the first communication network (255) and/or the second communication network (270) is a mobile communication network, or an Instant Messaging network.

18. The method according to any of the claims 15 to 17 comprising the following steps:
i.) a relay(260) replaces the source address of the data packet of the first communication network (255) by a global title of the one or more global titles of the relay (260);
ii.) the relay (260) passes the data packet to a mapping server (100) of the second communication network (270);
iii.) the response signal of the mapping server (100) is sent back to a virtual mapping server (280) of the relay (260);
iv.) the relay (260) replaces the routing information of the response signal by one global title of one or more global titles of the relay (260);
v.) the relay (260) passes the response signal to the first communication network (255).

19. The method according to claim 18 whereby the response signal of the mapping server (100) is a message reporting a successful delivery of the data packet, a TC-INVOKE Timeout, an unknown MSISDN, an absent subscriber short message or a short message delivery failure.

20. The method according to any of the claims 18 and 19 whereby the mapping server (100) is a HLR (140).

21. The method according to any of the claims 18 to 20 whereby the replaced routing information is temporarily stored into a memory of the virtual mapping server (280) of the relay (260).

## Patentansprüche

1. System zum Senden eines Datenpakets von einem ersten Kommunikations-Netzwerk (255) an ein zweites Kommunikations-Netzwerk (270), wobei das zweite Kommunikations-Netzwerk (270) von dem ersten Kommunikations-Netzwerk (255) direkt unerreichbar ist, umfassend:
eine Übertragungseinrichtung zum Übertragen des Datenpakets von dem ersten Kommunikations-Netzwerk;
ein Relais (260) zum Annehmen des Datenpakets von dem ersten Kommunikations-Netzwerk (255) und Weiterleiten des Datenpakets zu dem zweiten Kommunikations-Netzwerk (270);
eine Empfangseinrichtung zum Annehmen des Datenpakets von dem zweiten Kommunikations-Netzwerk und Erzeugen einer Datenpaket-Antwort; und
wobei das Relais (260) zudem dazu geeignet ist, die erzeugte Datenpaket-Antwort anzunehmen und die erzeugte Datenpaket-Antwort an das erste Kommunikations-Netzwerk (255) weiterzuleiten,
**dadurch gekennzeichnet, dass** das Relais (260) dazu geeignet ist, eine Quellenadresse des Datenpakets zu modifizieren und Routinginformation des Antwortsignals zu modifizieren.

2. System gemäß Anspruch 1, wobei das Datenpaket SMS oder Instant-Messaging Dienste umfasst.

3. System gemäß einem der Ansprüche 1 oder 2, wobei das erste Kommunikations-Netzwerk (255) und/oder das zweite Kommunikations-Netzwerk (270) ein Mobilfunk-Kommunikations-Netzwerk oder ein Instant-Messaging-Netzwerk ist.

4. System gemäß einem der vorangehenden Ansprüche, wobei das Relais (260) Mobil-Vermittlungsstellen eines oder mehrerer Mobilfunk-Netzwerkbetreiber umfasst.

5. System gemäß Anspruch 4, wobei eine Vielzahl von Mobil-Vermittlungsstellen durch ein internes Signalisierungssystem verbunden sind.

6. System gemäß Anspruch 5, wobei das interne Signalsystem auf dem Internetprotokoll oder SS7 basiert.

7. System gemäß einem der vorangehenden Ansprüche, wobei die Übertragungseinrichtung und/oder die Empfangseinrichtung eine Mobilstation, ein digitaler Organizer, ein Computer, eine Instant-Messaging-Einrichtung oder ein Telefon ist.

8. Relais (260), umfassend
ein erstes Modul zum Empfangen eines Datenpakets von einem ersten Kommunikations-Netzwerk (255) und zum Übertragen einer ersten Antwort an das erste Kommunikations-Netzwerk (255) und
ein zweites Modul für die Übertragung des Datenpakets an ein zweites Kommunikations-Netzwerk (270) und zum Empfangen einer zweiten Antwort von dem zweiten Kommunikations-Netzwerk (270), **dadurch gekennzeichnet, dass** das Relais (260) dazu geeignet ist, eine Quellenadresse des Datenpakets zu modifizieren und Routinginformation des ersten Antwortsignals zu modifizieren.

9. Relais (260) gemäß Anspruch 8, wobei das Datenpaket SMS oder Instant-Messaging Dienste umfasst.

10. Relais gemäß einem der Ansprüche 8 und 9, wobei das erste und/oder das zweite Kommunikations-Netzwerk ein Mobilfunk-Kommunikations-Netzwerk oder ein Instant-Messaging-Netzwerk sind.

11. Relais gemäß einem der Ansprüche 8 bis 10, wobei die erste und/oder zweite Antwort eine Nachricht ist, welche eine erfolgreiche Bereitstellung des Datenpakets, ein TC-INVOKE Zeitlimit, eine unbekannte MSISDN, eine Kurzmitteilung eines abwesenden Abonnenten oder einen Übermittlungsfehler einer Kurzmitteilung berichtet.

12. Relais gemäß einem der Ansprüche 8 bis 11, wobei das Relais (260) Mobil-Vermittlungsstellen eines oder mehrere Mobilfunk-Netzwerkbetreiber umfasst.

13. Relais gemäß Anspruch 12, wobei eine Vielzahl von Mobile Vermittlungsstellen durch ein internes Signalisierungssystem verbunden sind.

14. Relais gemäß Anspruch 13, wobei das interne Signalsystem auf dem Internetprotokoll oder SS7 basiert.

15. Verfahren zum Senden eines Datenpakets von einem ersten Kommunikations-Netzwerk (255) in ein zweites Kommunikations-Netzwerk (270), welches für das erste Kommunikations-Netzwerk (255) direkt unerreichbar ist, umfassend die folgenden Schritte:
i) das Datenpaket wird von dem ersten Kommunikations-Netzwerk (255) in das zweite Kommunikations-Netzwerk (270) geleitet, wobei eine Quellenadresse des Datenpakets beim Weiterleiten des Datenpakets von dem ersten Kommunikations-Netzwerk (255) zu dem zweiten Kommunikations-Netzwerk (270) modifiziert wird;
ii) ein Antwortsignal wird erwartet; und
iii) das Antwortsignal wird zurück in das erste Kommunikations-Netzwerk (255) geleitet, wobei Routinginformation des Antwortsignals beim Zurückleiten in das erste Kommunikations-Netzwerk (255) modifiziert wird.

16. Verfahren gemäß Anspruch 15, wobei das Datenpaket SMS oder Instant-Messaging Dienste umfasst.

17. Verfahren gemäß einem der Ansprüche 15 und 16, wobei das erste Kommunikations-Netzwerk (225) und/oder das zweite Kommunikations-Netzwerk (270) ein Mobilfunk-Kommunikations-Netzwerk oder ein Instant-Messaging-Netzwerk ist.

18. Verfahren gemäß einem der Ansprüche 15 bis 17, umfassend die folgenden Schritte:
i) ein Relais (260) ersetzt die Quellenadresse des Datenpakets des ersten Kommunikations-Netzwerk (255) durch einen globalen Titel des einen oder der mehreren globalen Titel des Relais (260);
ii) das Relais (260) leitet das Datenpaket zu einem Mapping-Server (100) des zweiten Kommunikations-Netzwerks (270);
iii) das Antwortsignal des Mapping-Servers (100) wird zu einem virtuellen Mapping-Server (280) des Relais (260) zurückgesandt;
iv) das Relais (260) ersetzt die Routinginformation des Antwortsignals durch einen globalen Titel des einen oder der mehreren globalen Titel des Relais (260);
v) das Relais (260) leitet das Antwortsignal an das erste Kommunikations-Netzwerk (255).

19. Verfahren gemäß Anspruch 18, wobei das Antwortsignal des Mapping-Servers (100) eine Nachricht ist, welche eine erfolgreiche Bereitstellung des Datenpakets, ein TC-INVOKE Zeitlimit, eine unbekannte MSISDN, eine Kurzmitteilung eines abwesenden Abonnenten oder einen Übermittlungsfehler einer Kurzmitteilung berichtet.

20. Verfahren gemäß einem der Ansprüche 18 und 19, wobei der Mapping-Server (100) ein HLR (140) ist.

21. Verfahren gemäß einem der Ansprüche 18 bis 20, wobei die ersetzte Routinginformation zeitweise in einem Speicher des virtuellen Mapping-Servers (280) des Relais (260) gespeichert ist.

## Revendications

1. Système pour envoyer un paquet de données depuis un premier réseau de communication (255) vers un deuxième réseau de communication (270), le deuxième réseau de communication (270) n'étant pas joignable directement par le premier réseau de communication (255), comprenant
un dispositif de transmission pour transmettre le paquet de données depuis le premier réseau de communication ;
un relais (260) pour accepter le paquet de données depuis le premier réseau de communication (255) et passer le paquet de données au deuxième réseau de communication (270)
un dispositif de réception pour accepter le paquet de données depuis le deuxième réseau de communication et engendrer une réponse de paquet de données ; et
le relais (260) étant, en outre, adapté pour accepter la réponse de paquet de données générée et pour passer la réponse de paquet de données générée au premier réseau de communication (255),
**caractérisé en ce que** le relais (260) est adapté pour modifier une adresse source du paquet de données et pour modifier des informations de routage du signal de réponse.

2. Système selon la revendication 1, dans lequel le paquet de données comprend un SMS ou un service de messagerie instantanée.

3. Système selon l'une quelconque des revendications 1 et 2, dans lequel le premier réseau de communication (255) et/ou le deuxième réseau de communication (270) est un réseau de communication mobile ou un réseau de messagerie instantanée.

4. Système selon l'une quelconque des revendications précédentes, dans lequel le relais (260) comprend des centres de commutation mobile d'un ou plusieurs opérateurs de réseau de communication mobile.

5. Système selon la revendication 4, dans lequel une pluralité de centres de commutation mobile est reliée par un système de signalisation interne.

6. Système selon la revendication 5, dans lequel le système de signal interne est basé sur un protocole internet ou un protocole SS7.

7. Système selon l'une quelconque des revendications précédentes, dans lequel le dispositif de transmission et/ou le dispositif de réception est une station mobile, un assistant numérique personnel (PDA), un ordinateur, un dispositif de messagerie instantanée ou un téléphone.

8. Relais (260), comprenant
un premier module pour la réception d'un paquet de données depuis un premier réseau de communication (255) et, pour la transmission d'une première réponse vers le premier réseau de communication (255) et
un deuxième module pour la transmission du paquet de données vers un deuxième réseau de communication (270) et pour la réception d'une deuxième réponse depuis le deuxième réseau de communication (270), **caractérisé en ce que** le relais (260) est adapté pour modifier une adresse source du paquet de données et pour modifier des informations de routage du premier signal de réponse.

9. Relais (260) selon la revendication 8, dans lequel le paquet de données comprend un SMS ou un service de messagerie instantanée.

10. Relais selon l'une quelconque des revendications 8 et 9, dans lequel le premier et/ou le deuxième réseau de communication est un réseau de communication mobile ou un réseau de messagerie instantanée.

11. Relais selon l'une quelconque des revendications 8 à 10, dans lequel la première et/ou deuxième réponse est un message rapportant une remise réussie du paquet de données, un message de dépassement de temps TC-INVOKE time out, un RNIS (MS ISDN) inconnu, un message court d'abonné absent ou un échec de remise de message court.

12. Relais selon l'une quelconque des revendications 8 à 11, dans lequel le relais (260) comprend des centres de commutation mobile d'un ou plusieurs opérateurs de réseau de communication.

13. Relais selon la revendication 12, dans lequel une pluralité de centres de commutation mobile est reliée par un système de signalisation interne.

14. Relais selon la revendication 13, dans lequel le système de signal interne est basé sur le protocole internet ou le protocole SS7.

15. Procédé d'envoi d'un paquet de données depuis un premier réseau de communication (255) vers un deuxième réseau de communication (270) qui n'est pas joignable directement pour le premier réseau de communication (255), le procédé comprenant les étapes suivantes :
i) le paquet de données depuis le premier réseau de communication (255) est passé vers le deuxième réseau de communication (270), dans lequel une adresse source du paquet de données est modifiée au passage du paquet de données depuis le premier réseau de communication (255) vers le deuxième réseau de communication (270)
ii) un signal de réponse est attendu ; et
iii) le signal de réponse est transmis en retour au premier réseau de communication (255), dans lequel des informations de routage du signal de réponse sont modifiées lors de la transmission en retour vers le premier réseau de communication (255).

16. Procédé selon la revendication 15, dans lequel le paquet de données comprend un SMS ou un service de messagerie instantanée.

17. Procédé selon l'une quelconque des revendications 15 et 16, dans lequel le premier réseau de communication (255) et/ou le deuxième réseau de communication (270) est un réseau de communication mobile ou un réseau de messagerie instantanée.

18. Procédé selon l'une quelconque des revendications 15 à 17, comprenant les étapes suivantes :
i) un relais (260) remplace l'adresse source du paquet de données du premier réseau de communication (255) par un titre global de l'un ou de plusieurs titres globaux du relais (260) ;
ii) le relais (260) passe le paquet de données vers un serveur de mappage (100) du deuxième réseau de communication (270) ;
iii) le signal de réponse du serveur de mappage (100) est renvoyé vers un serveur de mappage virtuel (280) du relais (260) ;
iv) le relais (260) remplace les informations de routage du signal de réponse par un titre global de l'un ou de plusieurs titres globaux du relais (260) ;
v) le relais (260) passe le signal de réponse vers le premier réseau de communications (255).

19. Procédé selon la revendication 18, dans lequel el signal de réponse du serveur de mappage (100) est un message rapportant une remise réussie du paquet de données, un message de dépassement de temps TC-INVOKE Time out, un RNIS (MSISDN) inconnu, un message court d'abonné absent ou un échec de remise de message court.

20. Procédé selon l'une quelconque des revendications 18 et 19, dans lequel le serveur de mappage (100) est un HLR (140).

21. Procédé selon l'une quelconque des revendications 18 à 20, dans lequel les informations de routage remplacées sont temporairement mémorisées dans une mémoire du serveur de mappage virtuel (280) du relais (260).
